(19) Europäisches Patentamt
European Patent Office
Office européen des brevets

(11) **EP 4 023 712 A1**

(12) **EUROPEAN PATENT APPLICATION**

(43) Date of publication:
**06.07.2022  Bulletin 2022/27**

(21) Application number: **20217597.2**

(22) Date of filing: **29.12.2020**

(51) International Patent Classification (IPC):
**C08L 23/08** (2006.01)    **H01B 3/44** (2006.01)
**C08K 3/22** (2006.01)    **C08K 3/26** (2006.01)
**C08F 210/16** (2006.01)   **C08F 2/00** (2006.01)

(52) Cooperative Patent Classification (CPC):
(C-Sets available)
**H01B 3/44; C08F 210/16; C08K 3/22; C08K 3/26; C08L 23/0815;** C08K 2003/2217; C08K 2003/265; C08L 2203/202                              (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Borealis AG**
**1020 Vienna (AT)**

(72) Inventors:
• **EFRAIMSSON, Lars**
  **44442 Stenungsund (SE)**
• **SULTAN, Bernt-Åke**
  **44442 Stenungsund (SE)**
• **RIBARITS, Elisabeth**
  **44442 Stenungsund (SE)**

(74) Representative: **Kador & Partner PartG mbB**
**Corneliusstraße 15**
**80469 München (DE)**

(54) **HIGHLY TRACK RESISTANT POLYETHYLENE COMPOSITIONS FOR WIRE AND CABLE APPLICATIONS**

(57)     The present invention relates to a crosslinkable polymer composition comprising a copolymer of ethylene and hexene, which is a multimodal polyethylene having at least two polymer fractions present in the polymer, each having different weight average molecular weights, the copolymer having a crystallinity, determined by DSC as described herein, of at least 40%, the polymer composition further comprising a carbon black content of not more than 4 wt.%, based on the total weight of the polymer composition, wherein the polymer composition does not contain a silane-modified polymeric component, and the polymer composition passes the tracking resistance test at least at 4.5 kV for 1h followed at 4.75 kV for 1 h, determined according to IEC60587 (2007), method 2A, on compression molded plaques prepared according to ISO 11357 The present invention further relates to a track resistant wire or cable comprising at least one layer of the above polymer composition or to the use of the polymer composition in a wire or cable for increasing track resistance, fire retardancy and/or heat resistance. The present invention further relates to a method for manufacturing the above polymer composition.

EP 4 023 712 A1

(52) Cooperative Patent Classification (CPC): (Cont.)

C-Sets
**C08F 210/16, C08F 2/001;**
**C08F 210/16, C08F 4/6546;**
**C08K 3/22, C08L 23/0815;**
**C08K 3/26, C08L 23/0815;**
C08F 210/16, C08F 210/14, C08F 2500/05,
C08F 2500/07, C08F 2500/12, C08F 2500/04,
C08F 2500/27, C08F 2500/35

**Description**

The present invention relates to improved track resistant polymer compositions comprising a copolymer of ethylene and hexene for wire and cables, its use in a wire or cable for increasing track resistance, track resistant wires and cables comprising a layer of the polymer composition, and a method for the production of such polymer compositions.

**Background of the Invention**

Improved track resistant materials are especially desired in covered conductor overhead lines (OH) which are liable to damages due to fires, voltage drops power cuts, and mechanical damages such as falling trees or contact with flying objects. On the other hand, covered conductor overhead lines have many advantages compared to AC cables laid in the ground, because of the cable capacitance that limits the lengths of AC cables. Higher voltage cables restrict cable lengths and give shorter lengths of the lines. AC cables are limited to shorter net lengths, depending on system voltage. Higher system voltages give shorter net lengths. The net length for cables can be expanded by compensating reactors, but this increases cost and installation and rises the losses for the cable network. These restrictions apply to system voltages over 10 kV. Therefore, aerial lines are still dominating for long distance power nets.

A covered conductor line can have very narrow distances between the phases and can therefore withstand trees falling on the line better. Such power lines can be built closer to trees and dispense with the need of scarifying forest areas. A further problem in dusty areas is that tracking deteriorates or destroys the line besides the insulators, and the line may break and fall to the ground.

Voltage drop in the line depends on the resistance of the conductors and the inductance between the lines. For aerial lines in the countryside, the inductance voltage drop can be the dominating factor in the line.

Narrow distance between conductors also lower the inductance of the aerial line and therefore the inductance voltage drop with covered conductors is reduced with around 50% compared to a bare line. Longer cable lines with lower system voltage can be build. This gives an easier network design and reduces costs.

Covered conductors in cable lines are common and have been used for over 30 years. It has been found that sparks appear on the surface of the cable in long term use, especially in areas with conductive dust and/or trees/branches coming in contact with the cable lines. These sparks on the surface of cables, also called tracking, destroy the insulation of the cables, resulting in burning of the counductor and finally in cable failures. Therefore, higher track resistance is highly desired by the network and power plant utilities. Nowadays, power nets are desired which may increase track resistance to greater than 3 kV up to 5.75 kV track resistance or even more on OH lines. A further desire is to increase fire resistance, so that fire does not spread along the line.

Plastic covered overhead conductors without metal sheaths, PAS and BLL/BLX conductors, were developed in order to improve the reliability of the distribution and transfer of electricity. These covered conductor systems offer also considerable space savings as the space required is approximately 40% less compared to a standard bare line. Covered conductor (CC) line construction costs are moderate, considering their advantages over traditional bare line structures.

Polymer compositions fulfilling tracking resistance of 4.5 kV are known, mostly those containing carbon black. However, those black compositions heat up in the sun and may add to the above tracking problems or may even cause fires due to low heat resistance.

Optical cables contain optical fibres for transmission of signals for any form of communication, data exchange or control purpose. For example, in GB A2 2 193 583 one type of such an optical cable is described. Besides optical fibres, optical cables comprise an outer sheath to protect these fibres. The outer sheath usually is based on a polymeric material such as a polyolefin, in particular polyethylene or a copolymer of ethylene, in which the ethylene monomer constitutes the greater part of the total mass of the polymer. The cable sheath must cope with the requirements of an easy production and good mechanical properties, such as tensile strength and elongation at break, especially, at increased temperatures up to 100° C. Further, the outer sheath should also have low heat deformation and good tracking resistance.

In particular, a good tracking resistance of the sheath is of high interest, because for practical reasons optical cables most often are installed adjacent to power cables. These power cables by their high voltages, particularly over 130 kV, generate strong electrical fields and thereby induce electrical voltages across regions of the sheaths of the neighbouring optical cables. This leads to creeping currents by tracking and further to local breakdown of the sheath, especially under damp conditions which is known as dry band arcing. Tracking is defined as the process that produces a track as a result of the action of electric arcs. The arc concentrates sufficient power to produce tracks and enough energy for the growth of the tracks. Failure occurs when the track extends enough to span the remaining distance between two electrodes or earth connection and therefore becomes a path of localised degradation on the surface of an insulating material. The tracking resistance is measured according to the inclined plane tracking test. Details of the applied test procedure according to this method are given in the Examples section arcing.

EP 1 267 189 A1 discloses an track resistant optical cable comprising at least one optical fibre and an outer sheath which comprises a polymeric material, preferably a bimodal ethylene butene copolymer, characterized in that the polymeric material forms a matrix for the sheath and consists of a multimodal olefin polymer obtained by coordination catalysed polymerization, and the total composition of the sheath comprises 15-40% by weight of magnesium hydroxide and/or aluminum hydroxide and 0.01-0.9 % by weight of carbon black.

WO 93/05424 A1 discloses a track resistant optical cable containing at least one optical fiber, and an outer sheath of polymeric material, characterized in that the polymeric material forms a matrix consisting of a linear polyethylene blended with 0 to at most 20 % by weight of a branched LDPE, based on the weight of the linear polyethylene, and in that the total composition of the sheath material contains 15-30 % by weight of magnesium hydroxide or aluminum hydroxide.

JP-2004-010864 A discloses a track resistant water-crosslinkable polymer composition comprising 8 to 50 pbw of magnesium hydroxide (B) and 0.2 to 1.1 pbw of carbon black (C) added to 100 pbw of an ethylene-based polymer (A) consisting mainly of a ethylene-$\alpha$-olefin copolymer. The polymer composition comprises 0.1 to 10 pbw of an unsaturated alkoxysilane (D), 0.01 to 1 pbw of an organic peroxide (E) and 0.001 to 1 pw of a silanol condensation catalyst (F).

Each of the above polymer compositions and cables suffer from low heat resistance, electrical safety problems, voltage drops, short circuits and damages, and mechanical problems such as insufficient tensile strength and elongation at break. Moreover, the demands for increased track resistance of the materials are strong in the relevant markets.

The present invention has the object to design a track resistant polymer composition for wire and cable applications and its use in a layer of a wire or cable, which polymer composition has an improved tracking resistance in combination with good mechanical properties, UV resistance and heat resistance. There has also been a need to reduce carbon black in the cable to reduce visibility of the cable in the landscape.

## Summary of the Invention

The present invention found that the above objects can be achieved by a crosslinkable polymer composition comprising a copolymer of ethylene and hexene, which is a multimodal polyethylene having at least two polymer fractions present in the polymer, each having different weight average molecular weights, the copolymer having a crystallinity, determined by DSC as described herein, of at least 40%, the polymer composition further comprising a carbon black content of not more than 4 wt.%, based on the total weight of the polymer composition, wherein the polymer composition does not contain a silane-modified polymeric component, and the polymer composition passes the tracking resistance test at least at 4.5 kV for 1h followed at 4.75 kV for 1 h, determined according to IEC60587 (2007), method 2A, on compression molded plaques prepared according to ISO 11357 and as described in the experimental section below. Preferably, the crosslinkable polymer composition passes the tracking resistance test at least at 5.75 kV for 1h followed at 6 kV for 1 h, determined according to IEC60587 (2007), method 2A, on compression molded plaques prepared according to ISO 11357.

The objects can further be achieved by a track resistant wire or cable comprising at least one layer of the above polymer composition or the use of the polymer composition in a wire or cable for increasing track resistance, fire retardancy and/or heat resistance.

The present invention further relates to a method for manufacturing the above polymer composition, comprising polymerization of at least two polymer components in separate reaction stages of a multistage polymerization process in the presence of a polymerisation catalyst, wherein the polymer component formed in a preceding polymerisation stage is present in a subsequent polymerisation stage.

## Detailed Description of the Invention

The crosslinkable polymer composition of the present invention comprises a copolymer of ethylene and hexene. The copolymer of ethylene and hexene is a multimodal polyethylene having at least two polymer fractions present in the polymer, each polymer fraction having a different weight average molecular weight. The expression "modality of a polymer" refers to the form of its molecular weight distribution (MWD) curve, i. e. the appearance of the graph of the polymer weight fraction as a function of its molecular weight. If the polymer is produced in a sequential step process e.g. by utilizing reactors coupled in series and using different conditions in each reactor, the different polymer fractions produced in the different reactors will each have their own molecular weight distribution which may considerably differ from one another. The molecular weight distribution curve of the resulting final polymer can be looked at as the superposition of the molecular weight distribution curves of the polymer fractions which will accordingly show two or more distinct maxima or at least be distinctly broadened compared with the curves for the individual fractions. A polymer showing such a molecular weight distribution curve is called "multimodal". Multimodal polymers can be produced according to several processes, which are described e.g. in WO 92/12182. It is known to produce multimodal, in particular bimodal, olefin polymers, preferably ethylene polymers, in two or more reactors connected in series. Examples thereof are described in EP 040 992, EP 041 796, EP 022 376, EP 0887379 and WO 92/12182. According to the disclosure of these documents, each of the polymerisation stages can be carried out in liquid, slurry or gas phase.

In the crosslinkable polymer composition according to the present invention, the copolymer of ethylene and hexene preferably has a density of from 920 to 970 $kg/m^3$ and a melt flow rate $MFR_2$, determined according to ISO 1133 at a load of 2.16 kg at 190 °C, of less than 0.4 g/10 min. More preferably, the copolymer may have a density of from 930 to 960 $kg/m^3$, even more preferably 945 to 955 $kg/m^3$ and a melt flow rate $MFR_2$ of not more than 0.4 g/10 min, more preferably not more than 0.2 g/10 min, even more preferably not more than 0.1 g/10 min.

Still further, preferably in the polyethylene composition not comprising carbon black the base resin preferably may have a density of at least 945 $kg/m^3$, more preferably of from 946 to 950 $kg/m^3$, and most preferably from 946.5 to 949 $kg/m^3$.

The multimodal copolymer of ethylene and hexene preferably is at least bimodal. Such a multimodal polymer comprises at least two polymer fractions present in the polymer, each having different weight average molecular weights. These fractions are termed in the following sometimes fraction (A) and (B), respectively.

An ethylene copolymer in this regard denotes a polymer comprising at least 50 wt% of ethylene monomer units.

Fraction (A) may be an ethylene homopolymer or the ethylene copolymer with the lowest comonomer content of the fractions. It is preferred that fraction (A) is an ethylene homopolymer.

An ethylene homopolymer thereby denotes a polymer consisting essentially of ethylene monomer units. Due to the requirements of large-scale polymerization it may be possible that the ethylene homopolymer includes minor amounts of comonomer units, which usually is below 0.1 mol%, preferably below 0.05 mol%, most preferably below 0.01 mol% of the ethylene homopolymer.

In a preferred embodiment of the present invention, sometimes called embodiment A in the following, the copolymer of ethylene and hexene may be bimodal consisting of polymer fractions (A) and (B), optionally further comprising a prepolymer fraction in an amount of up to 10 wt.%, more preferably up to 7 wt.%, and most preferably up to 5 wt.% of the total polymer. A person skilled in the art will understand that measurements as to properties of the polymer require the presence of stabilizers.

In embodiment A, fraction (A) of the copolymer may be an ethylene homo- or copolymer. Fraction (A) preferably has a density of 960 to 980 $kg/m^3$.

Furthermore, preferably, fraction (A) of the copolymer has an $MFR_2$ as measured in accordance with ISO 1133 of 150 to 600 g/10min, more preferably of 175 to 550 g/10min and most preferably of 200 to 550 g/10min.

Fraction (A) and/or fraction (B) may consist of a single polymer fraction made in one reactor, or may consists of two or more partial fractions made in separate reactors.

It is preferred that fraction (A) and/or fraction (B) consist of two partial fractions or a single fraction.

Most preferably, fraction (A) consists of one single fraction or two partial fractions, preferably produced in one or two loop reactors, respectively, and fraction (B) consists of one single fraction, preferably produced in a gas phase reactor.

If one or more fractions of the base resin consist of partial fractions produced in separate reactors, it is preferred that the reaction conditions are chosen so that essential the same polymer is produced therein. This means that if, for example and preferably, the base resin consists of fraction (A) and (B) and fraction (A) is produced as two partial fractions in two separate loop reactors under conditions so that essentially the same or the same polymer is produced therein, the polymer will still be a bimodal resin as it consists of two fractions of different polymers.

Furthermore, in the polyethylene composition the copolymer of ethylene and hexene may preferably have a weight average molecular weight Mw 150,000 to 350,000 g/mol, more preferably of 200,000 to 320,000 g/mol.

The copolymer of ethylene and hexene preferably has a molecular weight distribution Mw/Mn of from 20 to 35, more preferably from 22 to 31.

Preferably, the copolymer of ethylene and hexene makes up at least 10 wt.%, more preferably at least 20, and still more preferably at least 40 wt.% of the polyethylene composition.

The crosslinkable polymer composition according to the invention may further comprise an ethylene polymer or copolymer grafted or copolymerized with an unsaturated carboxylic acid or a derivative thereof, and/or an elastomeric ethylene copolymer.

The unsaturated carboxylic acid may be selected from maleic acid or its anhydride. The elastomeric ethylene copolymer may be e.g. a very low density copolymer of ethylene and 1-octene. It may preferably have a density in the range of from 860 to 910 $kg/m^3$ and a $MFR_2$ in the range of from 0.1 to 50 g/10 min.

On the other hand, the multimodal copolymer of ethylene and hexene may alternatively constitute the entirety of polymeric components in the polyethylene composition according to the invention, usually making up at least 90 wt% of the total composition.

In addition to the multimodal copolymer of ethylene and hexene, usual additives for utilization with polyolefins, such as pigments (e.g. carbon black), stabilizers (e.g. antioxidant agents), and/or UV absorbers, antistatic agents and utilization agents (such as processing aid agents) may be present in the polyethylene composition. Preferably, the amount of these additives is 10 wt% or below, more preferably 8 wt% or below, most preferably 5 wt% or below, of the composition.

Preferably, the composition comprises carbon black in an amount of not more than 4 wt%, more preferably not more than 3 wt%, even more preferably not more than 2.5 wt.% or not more than 1 wt.%. The carbon black may be also be contained in the composition in an amount of from 0.1 to 0.8 wt%, based on the weight of the total composition. Any of the above ranges or limits may be combined. The carbon black content may also be as low as 0.002 wt.% or even 0.001 wt.%.

Furthermore, preferably in the polyethylene composition comprising carbon black, the copolymer of ethylene and hexene may have a content of units derived from hexene-1 from 0.9 to 1.45 mol%, more preferred of 0.95 to 1.30 mol%, still more preferably of 1.0 to 1.25 mol%, still more preferably of from 1.03 to 1.24 mol% and particularly preferably of from 1.04 to 1.23 mol%.

Still further, preferably in the polyethylene composition comprising carbon black, the copolymer of ethylene and hexene may have a number average molecular weight of 9,000 g/mol or higher, preferably of 9,300 g/mol or higher.

It is preferred that in the polyethylene composition comprising carbon black the base resin has a total content of units derived from hexene-1 of 0.50 to 0.70 mol%, preferably of 0.52 to 0.69 mol% and more preferably of 0.54 to 0.67 mol%.

In a further embodiment of the present invention, the polyethylene composition does not comprise carbon black.

The crosslinkable polymer composition of the invention may preferably further comprise a filler selected from the group consisting of aluminum trioxide, metal carbonate, calcium oxide, and/or a metal hydroxide. A preferred filler may be ground or precipitated magnesium hydroxide or calcium carbonate. Another preferred filler is calcium carbonate which may be coated with stearic acid and which may have an average particle size of from 0,1 to 20 μm, more preferably from 0,5 to 10 μm, and even more preferably from 1 to 3 μm. The filler may preferably be contained in an amount of from 10 to 65 wt.%, more preferably 20 to 30 wt.%, even more preferably at least 25 wt.%, based on the total weight of the composition. The above upper and lower limits may be combined with each other in every combination,

The crosslinkable polymer composition according to of the invention may preferably further comprise a UV stabiliser and/or an antioxidant and/or a pigment.

The UV stabilizer may be a hindered amine light-stabilizer (HALS), selected from Chimassorb® 944, Tinuvin® 622, Tinuvin® 770 and mixtures thereof. Above that, any of the UV stabilizers, preferably HALS compounds recited in EP 3 622 541 A1 may be used. Two or more UV stabilizers may be combined. Any of the above mentioned UV stabilizers may also be combined with one or more UV absorbers, such as benzotriazoles, benzophenones, triazines, or phenolic compounds. Any of the UV absorbers recited in EP 19 191 837.4 may be used.

The UV stabilizer may be contained in an amount of from 0.1 to 2 wt.%, more preferably 0.2 to 1.5 wt.%, even more preferably 0.3 to 1 wt.%., based on the total weight of the composition.

An antioxidant may be selected e.g. from sterically hindered phenols (e.g. Irganox 1010 (CAS no 128-37-0), Irganox 1076 (CAS no 2082-79-3), Irganox 1035 (Cas no 41484-359), sulfur-containing antioxidants (e.g. Irganox PS 802 (Cas no 693-36-7), Irganox PS 800 (Cas no 2500-88-1), phosphites/phosphonites (e.g. Irgafos 168 (Cas no 31570-04-4), Irgafos P-EPQ (Cas no 38613-77-3), nitrogen-containing antioxidants (e.g. Naugard 445 (Cas 10081-67-1), Vulcanox HS/LG (cas no 26780-96-1). A combination of two or more may be used.

The antioxidant may be contained in an amount of from 0.1 to 2 wt.%, more preferably 0.2 to 1 wt.%, even more preferably 0.3 to 0.5 wt.%, based on the total weight of the composition.

A pigment may be selected e.g. from blue, green or orange pigments. A particularly preferred pigment is titan dioxide. Preferably, the total amount of pigments different form carbon black present in the polyethylene composition may be 1 wt.% or below, further preferred 0.001 to 2 wt.%, of the total composition A preferred pigment is carbon black. In case of carbon black, it may be contained in an amount of from 0.001-5 wt.%.

The invention is further related to a process for the production of a polyethylene composition according to any of the above described embodiments wherein the multimodal copolymer of ethylene and hexene is produced in a multi-stage process.

The multimodal copolymer of ethylene and hexene comprises at least two or more ethylene homo- or copolymer fractions as described above.

Optionally, the multimodal copolymer of ethylene and hexene further comprises a prepolymer fraction as described above.

A multi-stage polymerization process denotes a process in which a polymer comprising two or more fractions is produced by polymerizing each of the at least two polymer fractions in a separate reaction stage, usually with different reaction conditions in each stage which comprises a polymerization catalyst. The polymerization is preferably followed by a compounding step.

It is preferred that the fractions (A), (B) and possibly a further fraction (C) are polymerized at different stages of the multi-stage process in any order. It is thereby preferred that the fractions (A), (B) and (C) are polymerized in subsequent stages. More fractions may also be produced in the copolymer.

It is preferred that the multimodal polyethylene in the polymer composition according to the invention is polymerized in at least one slurry phase reactor and at least one gas phase reactor.

In a preferred embodiment fraction (A) is polymerized in a slurry phase reactor, preferably a loop reactor, and fraction (B) is polymerized in a gas phase reactor in any order. If a copolymer comprising fractions (A), (B) and (C) is produced, preferably fractions (A) and (B) are polymerized in a slurry phase reactor, preferably a loop reactor, and fraction (C) is polymerized in a gas phase reactor. The multistage process may preferably further comprise a prepolymerization stage.

In any order denotes that there is no preferred order in which the subsequent polymerization stages of the multi-stage process are arranged.

In one preferred embodiment of the process according to the invention, fraction (A) is polymerized in the first reaction stage.

It is thereby preferred that fraction (B) is polymerized in the second reaction stage in the presence of fraction (A).

If fraction (C) is present, it is preferably polymerized in the third reaction stage in the presence of fractions (A) and (B).

Preferably, the multistage process consists of a reaction stage conducted in a slurry phase reactor followed by a reaction stage conducted in a gas phase reactor. Optionally, the reaction stage conducted in the slurry phase reactor is thereby preceded by a prepolymerization stage. In a preferred embodiment, the multistage process consists of two consecutive reaction stages conducted in a slurry phase, preferably loop reactor, followed by a reaction stage conducted in a gas phase reactor. Detailed conditions are described in EP 1 655 333 A1.

The low molecular weight polymer (e.g. fraction (A)) can be prepared in the first polymerization step and the high molecular weight hexene-1 copolymer (e.g. fraction (B)) in the second polymerization step. This can be referred to as the normal mode and is preferred.

The HMW copolymer fraction (B) may also be prepared in the first polymerization step and the LMW polymer fraction (A) in the second polymerization step. This can be referred to as the reverse mode.

If the LMW fraction is produced in the first polymerization step, the melt flow rate of the first ethylene fraction (A) can be directly measured as described herein. If the LMW fraction is produced in the second polymerization step, the melt flow rate of the LMW ethylene fraction (A) can be calculated on the basis of the weight ratios of the LMW fraction and the HMW fraction and the molecular weight of the total polyethylene composition.

In addition, subtracting GPC curves, when fractions of each polymer are known is also possible for determining melt flow rate of the polymer produced in the second stage of a multi-stage polymerization process.

The slurry and gas phase stages may be carried out using any conventional reactors known in the art. A slurry phase polymerization may, for example, be carried out in a continuously stirred tank reactor; a batch-wise operating stirred tank reactor or a loop reactor. Preferably, slurry phase polymerization is carried out in a loop reactor. In such reactors the slurry is circulated with a high velocity along a closed pipe by using a circulation pump. Loop reactors are generally known in the art and examples are given, for instance, in US 4,582,816 A, US 3,405,109 A, US 3,324,093 A, EP 479 186 A and US 5,391,654 A.

The term gas phase reactor encompasses any mechanically mixed, fluidized bed reactor, fast fluidized bed reactor or settled bed reactor or gas phase reactors having two separate zones, for instance one fluidized bed combined with one settled bed zone. Preferably, the gas phase reactor for the second polymerization step is a fluidized bed reactor.

As the catalyst system, any system of catalyst and optionally cocatalyst can be used suitable for polymerising polyethylene resins. Especially suitable are Ziegler-Natta catalyst systems. In a preferred embodiment, the polymerisation is carried out in the presence of a Ziegler-Natta catalyst. Suitable Ziegler-Natta catalysts preferably contain a magnesium compound, an aluminum compound and a titanium compound supported on a particulate support.

A particularly preferred catalyst system and its preparation are described in EP 1 378 528 A1.

The crosslinkable polymer composition of the invention may be used in a wire or cable for increasing track resistance. Thus, the present invention further relates to a track-resistant wire or cable, preferably a power cable or an optical cable comprising at least one layer comprising the above-described crosslinkable polymer composition. Preferably, said layer is an insulation layer or a jacket layer or a sheath layer.

It is further preferred that the ethylene polymer is present in a sheath of a wire or cable in an amount as high as possible, i. e. apart from optional further constituents, such as the above filler, stabilizers and/or carbon black.

When producing the wire or cable material, preferably the sheath material, the ingredients thereof, such as ethylene polymer, magnesium hydroxide and/or aluminum hydroxide, carbon black and optional additives, should be mixed intimately in order to obtain a composition as homogeneous as possible to produce, in a preferred embodiment, the outer sheath of an optical cable

Compounding of the sheath material is preferably carried out according to the method described in WO 98/15591. According to this method, the filler and the carbon black may be mixed into the polymeric material in two or more separate steps by letting the polymer pass through the viscosity cross-over stage two or more times i.e. each step implies a separate compounding operation mixer or extruder. Both ingredients in the form of a fine powder are added in the desired proportion in order to get best result and to incorporate the ingredients as homogeneously into the sheath material as possible. The compounding can also be performed in a common compounding unit, such as a double screw compounder, e.g. those commonly supplied by Werner & Pfleiderer and Berstorf, Banbury mixers, Farrel Pominis FCM mixer, or Buss co-kneaders.

The powder should have a size as low as practically possible. Thus, the filler, preferably magnesium hydroxide may preferably have a median particle size $d_{50}$ of from 1 to 10 $\mu$m, more preferably of from 1.5 to 6 $\mu$m. The carbon black may preferably have a nominal particle size of 10-30 nm, more preferably of 20 nm. The particle size may be determined according to the method described in the experimental section.

The crosslinkable polymer composition according to the invention may preferably have a tensile strength, determined according to ISO 527-2, of at least 12.5 MPa, more preferably at least 21.5 MPa.

The crosslinkable polymer composition according to the invention may preferably have an elongation at break, determined according to ISO 527-2, of at least 50%, more preferably at least 100%, even more preferably at least 300%.

The crosslinkable polymer composition according to according to the invention may preferably have a UV resistance in terms of an elongation of at least 50% after 1000 h ageing, more preferably at least 100%, determined according to the Sepap UV ageing test , measured in accordance with NFC62-062-2 on 1 mm plaques.

The crosslinkable polymer composition of the invention may be crosslinked in the presence of a crosslinking agent or in the presence of moisture and a condensation catalyst. Known technologies for moisture curing in the presence of a condensation catalyst are described e.g. in US patents no. 4,117,195, US 3,646,155 or in EP 0 193 317 A1.

The tracking-resistant polymer composition of the present invention can be used as thermoplastic or a crosslinked material by use of e.g. Direct Peroxide Injection (DPI) process in which peroxide is injected into the extruder, obtaining a cable, which then enters the heated and pressurized vulcanisation tube for curing the cable. Instead of injecting the peroxide into the extruder an alternative is to impregnate the pellets with peroxide prior to extrusion. The tracking-resistant polymer composition of the present invention can also be crosslinked via moisture curing e.g. via the processes described in US patents no. 4,117,195, US 3,646,155.

**Experimental Part**

**A. Measuring methods**

The following definitions of terms and determination methods apply for the above general description of the invention as well as to the examples below, unless otherwise defined.

**(1) Melt Flow Rate (MFR)**

The MFR can be measured according to ISO 1133 (Davenport R-1293 from Daventest Ltd). MFR values can be measured at three different loads 2.16 kg ($MFR_{2.16}$), 5 kg ($MFR_5$) and 21.6 kg ($MFR_{21}$) at 190°C.

**(2) Density**

The density can be measured according to ISO 1183-1 - method A (2019). Sample preparation can be done by compression moulding in accordance with ISO 1872-2:2007.

**(3) Tracking test**

The tracking test was performed in accordance with IEC 60587 (2007), method 2A "stepwise tracking voltage" with failure criterion A. IEC 60587 (2007) prescribes that exceeding 60 mA does not occur sooner than the third voltage step. Five plaques were measured for all materials and the pass percent is calculated on the number of plaques passing the respective kV level. The test was performed at 4.5kV for one hour and at 4.75 kV for one hour or at 5.75kV for one hour and at 6 kV for one hour, without current exceeding 60 mA.

Plaques (6x200x200 mm) were prepared for the tracking tests with compression moulding (Collin R 1358, edition: 2/060510) according to ISO 293. Normaly tapes around 1.2 mm thickness was extruded and used in the plates. The pellets or tapes were pressed between two Mylar film sheets and positioned in a steel frame (200x200x6mm) The samples were pressed by applying 20 bar for a minute at 200°C, followed by 200 bars pressure for 5 minutes at the same temperature. The remaining compression was done at the same high pressure for 9 minutes at a cooling rate of 15°C/min. The amount of pellets or tapes used for each plaque was calculated using the density of the material with an excess of 10 wt.-%. The plates were sawed out and drilled with holes according to standard size for the tracking tests.

Then crosslinking plates were done the material pellets first was impregnated with peroxide and then the plates were done in the steel (6x200x200 mm) frame by pressed by applying 20 bar for a minute at 205°C, followed by 200 bars pressure for 5 minutes at the same temperature. The remaining compression was done at the same high pressure for 9 minutes at a cooling rate of 15°C/min. The amount of pellets or tapes used for each plaque was calculated using the density of the material with an excess of 10 wt.-%. The plates were sawed out and drilled with holes according to standard size for the tracking tests.

**(4) Flame retardant testing**

A covered conductor overhead cable was produced from a track resistant blend IE4 (shown in Table 2 below). This cable was tested according to single vertical flame test according to EN60332-1 and UL 1581 single wire flame tests and fulfils the demands according to both standards.
The covered conductor overhead cable consists of an 50 mm$^2$ 7 strand aluminum-conductor with a diameter of 7.8 mm. The blend of IE4 formed the insulation and the track resistant layer had a mean thickness of 6.8 mm. The cable diameter was 21.4 mm.

**(5) Median Particle Size ($d_{50}$)**

Median particle size dso can be measured by laser diffraction (ISO 13320), dynamic light scattering (ISO 22412) or sieve analysis (ASTM D1921-06). For the metal hydroxide used in the working examples, the determination of the median particle size dso was conducted by laser diffraction according to ISO 13320.

**(6) Manufacture of tape used for determination of tensile strength, elongation at break, tracking and UV ageing**

For determining the tensile strength and elongation at break, tapes (1.8 mm) were produced on a Collin Teach-Line E20T tape extruder with a 4.2:1, 24D compression screw with a 20 mm diameter. The temperature profile for the polymers was 150/180/200°C and the screw speed was 55 rpm.

**(7) Tensile Testing**

Tensile testing was executed in accordance with ISO 527-1 and ISO 527-2 using an Alwetron TCT 10 tensile tester. Ten test specimen were punched from a plaque using ISO 527-2/5A specimen and placed in a climate room with relative humidity of 50 $\pm$ 5 % at a temperature of 23°C for at least 16 hours before the test. The test specimen were placed vertically between clamps with a distance of 50 $\pm$ 2 mm, extensometer clamps with a distance of 20 mm and a load cell of 1 kN. Before the test was carried out, the exact width and thickness for every sample was measured and recorded. Each sample rod was tensile tested with a constant speed of 50 mm/min until breakage and at least 6 approved parallels were performed. In highly filled systems, there is generally a variation of the results and therefore the median value was used to extract a single value for elongation at break (%) and tensile strength (MPa).

**(8) UV ageing**

The UV ageing was performed in accordance with NFC62-062-2 on 1 mm thick dumbbells. Accordingly, it was conducted in a Sepap (Mercury vapor lamps) oven at 60°C.

**(9) Comonomer content of polymers**

Quantitative nuclear-magnetic resonance (NMR) spectroscopy was used to quantify the comonomer content of the polymers.

Hexene content

Quantitative $^{13}$C{$^1$H} NMR spectra recorded in the molten-state using a Bruker Avance III 500 NMR spectrometer operating at 500.13 and 125.76 MHz for $^1$H and $^{13}$C respectively. All spectra were recorded using a $^{13}$C optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification (Klimke, K., Parkinson, M., Piel, C., Kaminsky, W., Spiess, H.W., Wilhelm, M., Macromol. Chem. Phys. 2006;207:382., Parkinson, M., Klimke, K., Spiess, H.W., Wilhelm, M., Macromol. Chem. Phys. 2007;208:2128., Castignolles, P., Graf, R., Parkinson, M., Wilhelm, M., Gaborieau, M., Polymer 50 (2009) 2373). Standard single-pulse excitation was employed utilising the transient NOE at short recycle delays of 3s (Pollard, M., Klimke, K., Graf, R., Spiess, H.W., Wilhelm, M., Sperber, O., Piel, C., Kaminsky, W., Macromolecules 2004;37:813., Klimke, K., Parkinson, M., Piel, C., Kaminsky, W., Spiess, H.W., Wilhelm, M., Macromol. Chem. Phys. 2006;207:382.) and the RS-HEPT decoupling scheme (Filip, X., Tripon, C., Filip, C., J. Mag. Resn. 2005, 176, 239, Griffin, J.M., Tripon, C., Samoson, A., Filip, C., and Brown, S.P., Mag. Res. in Chem. 2007 45, S1, S198). A total of 16384 (16k) transients were acquired per spectrum. This setup was chosen due its high sensitivity towards low comonomer contents.

Quantitative $^{13}C\{^1H\}$ NMR spectra were processed, integrated and quantitative properties determined using custom spectral analysis automation programs. All chemical shifts are internally referenced to the bulk methylene signal ($\delta+$) at 30.00 ppm (J. Randall, Macromol. Sci., Rev. Macromol. Chem. Phys. 1989, C29, 201).

Characteristic signals corresponding to the incorporation of 1-hexene were observed (J. Randall, Macromol. Sci., Rev. Macromol. Chem. Phys. 1989, C29, 201.) and all contents calculated with respect to all other monomers present in the polymer.

Characteristic signals resulting from isolated 1-hexene incorporation i.e. EEHEE comonomer sequences, were observed. Isolated 1-hexene incorporation was quantified using the integral of the signal at 38.29 ppm assigned to the $_*B4$ sites, accounting for the number of reporting sites per comonomer:

$$H = I_{*B4}$$

When characteristic signals resulting from consecutive 1-hexene incorporation, i.e. EHHE comonomer sequences were observed, such consecutive 1-hexene incorporation was quantified using the integral of the signal at 40.46 ppm assigned to the $\alpha\alpha B4B4$ sites accounting for the number of reporting sites per comonomer:

$$HH = 2 * I_{\alpha\alpha B4B4}$$

When characteristic signals resulting from non consecutive 1-hexene incorporation, i.e. EHEHE comonomer sequences were observed, such non-consecutive 1-hexene incorporation was quantified using the integral of the signal at 24.7 ppm assigned to the $\beta\beta B4B4$ sites accounting for the number of reporting sites per comonomer:

$$HEH = 2 * I_{\beta\beta B4B4}$$

Due to the overlap of the signals from the *B4 and *$\beta\beta$B4B4 sites from isolated (EEHEE) and non-consecutively incorporated (EHEHE) 1-hexene respectively the total amount of isolated 1-hexene incorporation is corrected based on the amount of non-consecutive 1-hexene present:

$$H = I_{*B4} - 2 * I_{\beta\beta B4B4}$$

With no other signals indicative of other comonomer sequences, i.e. 1-hexene chain initiation, observed the total 1-hexene comonomer content was calculated, based solely on the amount of isolated (EEHEE), consecutive (EHHE) and non-consecutive (EHEHE) 1-hexene comonomer containing sequences:

$$H_{total} = H + HH + HEH$$

Characteristic signals resulting from saturated end-groups were observed. The content of such saturated end-groups was quantified using the average of the integral of the signals at 22.84 and 32.23 ppm assigned to the 2s and 3s sites respectively:

$$S = (1/2)*( I_{2s} + I_{3s} )$$

The relative content of ethylene was quantified using the integral of the bulk methylene ($\delta+$) signals at 30.00 ppm:

$$E = (1/2)*I_{\delta++}$$

The total ethylene comonomer content was calculated based the bulk methylene signals and accounting for ethylene units present in other observed comonomer sequences or end-groups:

$$E_{total} = E + (2/2)*H + (1/4)*HH + (3/4)*HEH + (3/2)*S$$

The total mole fraction of 1-hexene in the polymer was then calculated as:

$$fH = ( H_{total} / ( E_{total} + H_{total} )$$

The total comonomer incorporation of 1-hexene in mole percent was calculated from the mole fraction in the usual manner:

$$H [mol\%] = 100 * fH$$

The total comonomer incorporation of 1-hexene in weight percent was calculated from the mole fraction in the standard manner:

$$H [wt\%] = 100 * ( fH * 84.16) / ( (fH * 84.16) + ((1-fH) * 28.05) )$$

Butene Content

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification (Klimke, K., Parkinson, M., Piel, C., Kaminsky, W., Spiess, H.W., Wilhelm, M., Macromol. Chem. Phys. 2006;207:382., Parkinson, M., Klimke, K., Spiess, H.W., Wilhelm, M., Macromol. Chem. Phys. 2007;208:2128., Castignolles, P., Graf, R., Parkinson, M., Wilhelm, M., Gaborieau, M., Polymer 50 (2009) 2373). Standard single-pulse excitation was employed utilising the transient NOE at short recycle delays of 3s (Pollard, M., Klimke, K., Graf, R., Spiess, H.W., Wilhelm, M., Sperber, O., Piel, C., Kaminsky, W., Macromolecules 2004;37:813., Klimke, K., Parkinson, M., Piel, C., Kaminsky, W., Spiess, H.W., Wilhelm, M., Macromol. Chem. Phys. 2006;207:382.) and the RS-HEPT decoupling scheme (Filip, X., Tripon, C., Filip, C., J. Mag. Resn. 2005, 176, 239, Griffin, J.M., Tripon, C., Samoson, A., Filip, C., and Brown, S.P., Mag. Res. in Chem. 2007 45, S1, S198). A total of 1024 (1k) transients were acquired per spectrum. This setup was chosen due its high sensitivity towards low comonomer contents.

Quantitative $^{13}C\{^1H\}$ NMR spectra were processed, integrated and quantitative properties determined using custom spectral analysis automation programs. All chemical shifts are internally referenced to the bulk methylene signal ($\delta+$) at 30.00 ppm (J. Randall, Macromol. Sci., Rev. Macromol. Chem. Phys. 1989, C29, 201).

Characteristic signals corresponding to the incorporation of 1-butene were observed (J. Randall, Macromol. Sci., Rev. Macromol. Chem. Phys. 1989, C29, 201.) and all contents calculated with respect to all other monomers present in the polymer.

Characteristic signals resulting from isolated 1-butene incorporation i.e. EEBEE comonomer sequences, were observed. Isolated 1-butene incorporation was quantified using the integral of the signal at 39.84 ppm assigned to the $_*B2$ sites, accounting for the number of reporting sites per comonomer:

$$B = I_{*B2}$$

When characteristic signals resulting from consecutive 1-butene incorporation i.e. EBBE comonomer sequences were observed, such consecutive 1-butene incorporation was quantified using the integral of the signal at 39.4 ppm assigned to the $\alpha\alpha B2B2$ sites accounting for the number of reporting sites per comonomer:

$$BB = 2 * I_{\alpha\alpha B2B2}$$

When characteristic signals resulting from non consecutive 1-butene incorporation i.e. EBEBE comonomer sequences were also observed, such non-consecutive 1-butene incorporation was quantified using the integral of the signal at 24.7 ppm assigned to the $\beta\beta B2B2$ sites accounting for the number of reporting sites per comonomer:

$$BEB = 2 * I_{\beta\beta B2B2}$$

Due to the overlap of the *B2 and *$\beta$B2B2 sites of isolated (EEBEE) and non-consecutively incorporated (EBEBE) 1-butene respectively the total amount of isolated 1-butene incorporation is corrected, based on the amount of non-consecutive 1-butene present:

$$B = I_{*B2} - 2 * I_{\beta\beta B2B2}$$

With no other signals indicative of other comonomer sequences, i.e. butene chain initiation, observed the total 1-butene comonomer content was calculated based solely on the amount of isolated (EEBEE), consecutive (EBBE) and non-consecutive (EBEBE) 1-butene comonomer sequences:

$$B_{total} = B + BB + BEB$$

Characteristic signals resulting from saturated end-groups were observed. The content of such saturated end-groups was quantified using the average of the integral of the signals at 22.84 and 32.23 ppm assigned to the 2s and 3s sites respectively:

$$S = (1/2)*( I_{2s} + I_{3s} )$$

The relative content of ethylene was quantified using the integral of the bulk methylene ($\delta+$) signals at 30.00 ppm:

$$E = (1/2)*I_{\delta+}$$

The total ethylene comonomer content was calculated based the bulk methylene signals and accounting for ethylene units present in other observed comonomer sequences or end-groups:

$$E_{total} = E + (5/2)*B + (7/2)*BB + (9/2)*BEB + (3/2)*S$$

The total mole fraction of 1-butene in the polymer was then calculated as:

$$fB = ( B_{total} / ( E_{total} + B_{total} )$$

The total comonomer incorporation of 1-butene in mole percent was calculated from the mole fraction in the usual manner:

$$B\ [mol\%] = 100 * fB$$

The total comonomer incorporation of 1-butene in weight percent was calculated from the mole fraction in the standard manner:

$$B\ [wt\%] = 100 * ( fB * 56.11) / ( (fB * 56.1$$

**B. Materials**

**Polymer A**

Polymer is a natural bimodal high density polyethylene. It has melt flow rates of $MFR_2$ of 0.45 g/10min, $MFR_5$ of 1.75 g/10min and $MFR_{21}$ of 38 g/10min. The density is 942 kg/$m^3$ and is produced with 1-butene as comonomer (2 wt-%).

**Polymer B**

Polymer B is a natural bimodal high density polyethylene. It has melt flow rates of $MFR_2$ of < 0.1 g/10min, $MFR_5$ of 0.21 g/10min and $MFR_{21}$ of 6.2 g/10min. The density is 949 kg/$m^3$ and is produced with 1-hexene as comonomer (1.4wt-%). The production of Polymer B is described below.

**Polymer production**

Catalyst preparation for Polymer A and B

Complex preparation

87 kg of toluene was added into the reactor. Then 45.5 kg Bomag A in heptane was also added in the reactor. 161 kg 99.8 % 2-ethyl-1-hexanol was then introduced into the reactor at a flow rate of 24-40 kg/h. The molar ratio between BOMAG-A and 2-ethyl-1-hexanol was 1:1.83.

Solid catalyst component preparation

275 kg silica (ES747JR of Crossfield, having average particle size of 20 $\mu$m) activated at 600 °C in nitrogen was charged into a catalyst preparation reactor. Then, 411 kg 20 % EADC (2.0 mmol/g silica) diluted in 555 litres pentane was added into the reactor at ambient temperature during one hour. The temperature was then increased to 35 °C while stirring the treated silica for one hour. The silica was dried at 50 °C for 8.5 hours. Then 655 kg of the complex prepared as described above (2 mmol Mg/g silica) was added at 23 °C during ten minutes. 86 kg pentane was added into the reactor at 22 °C during ten minutes. The slurry was stirred for 8 hours at 50 °C. Finally, 52 kg $TiCl_4$ was added during 0.5 hours at 45 °C. The slurry was stirred at 40 °C for five hours. The catalyst was then dried by purging with nitrogen.

**Polymer A**

Polymer A is produced in accordance with Example 1 of EP 1 327 664 B1.

**Polymer B**

A loop reactor having a volume of 50 $dm^3$ was operated at a temperature of 70 °C and a pressure of 57 bar. Into the reactor were fed ethylene, propane diluent and hydrogen. Also the solid Ziegler-Natta polymerization catalyst produced as described above was introduced into the reactor together with triethylaluminium cocatalyst so that the molar ratio of Al/Ti was about 15. The estimated production split was 2 wt.%.

A stream of slurry was continuously withdrawn and directed to a loop reactor having a volume of 150 $dm^3$ and which was operated at a temperature of 95 °C and a pressure of 55 bar. Into the reactor were further fed additional ethylene, propane diluent and hydrogen so that the ethylene concentration in the fluid mixture was 3.9 % by mole and the hydrogen to ethylene ratio was 390 mol/kmol. The estimated production split was 16 wt.%. The ethylene homopolymer withdrawn from the reactor had $MFR_2$ of 280 g/10 min.

A stream of slurry from the reactor was withdrawn intermittently and directed into a loop reactor having a volume of 350 $dm^3$ and which was operated at 95 °C temperature and 52 bar pressure. Into the reactor was further added a fresh propane, ethylene, and hydrogen so that the ethylene concentration in the fluid mixture was 3.7 mol-% and the molar ratio of hydrogen to ethylene was 370 mol/kmol. The ethylene homopolymer withdrawn from the reactor had $MFR_2$ of 282 g/10 min. The estimated production split was 27 wt.%.

The slurry was withdrawn from the loop reactor intermittently and directed to a flash vessel operated at a temperature of 50 °C and a pressure of 3 bar. From there the polymer was directed to a fluidized bed gas phase reactor operated at a pressure of 20 bar and a temperature of 85 °C. Additional ethylene and 1-hexene comonomer, nitrogen as inert gas and hydrogen were added so that the molar ratio of hydrogen to ethylene was 7 mol/kmol and the molar ratio of 1-hexene to ethylene was 46 mol/kmol. The estimated production split was 55 wt.%. The polymer had a melt

flow rate $MFR_5$ of 0.22 g/10 min and a density of 949 $kg/m^3$.

**Preparation of the polymer compositions**

The polymer compositions according to the inventive example (IE1 to IE6) and the comparative examples (CE1 and CE2) were produced by mixing the components together in a BUSS-co-kneader (MDK/E 46 -B) at a screw speed of 225 rpm and at a set temperature of 40, 160, 180, 200°C in the kneading section and at 200°C in the pelletizing extruder. The mixer screw was heated to 120°C. The extruder screw temperature was 160°C, the barrel heated to 170°C and the speed was 4 rpm. The amounts of the different components in the polymer compositions and the properties of the polymer compositions according to the inventive example and the comparative examples are shown in Table 2 and Table 3 below.

CE2 contained 74.35 wt.% of the composition of CE1 with additional additives indicated in Table 2 below. IE2 and IE 3 contained 75 wt.% of the composition of IE1 with additional additives indicated in Table 2. IE5 and IE6 contained respective amounts of IE1 with additional additives/materials as given in Table 3 below.

**Additives/Materials**

Chimassorb® 944, Chimassorb® 2020 and Tinuvin® 783 are hindered amine light stabilizers commercially available form BASF.

Irganox® 1010 and Irgafos® 168 are heat stabilizers commercially available from BASF.

Calcium stearate is commercially available from Bärlocher.

The carbon black used is Printex Alpha A commercially available from Orion.

MDH-1 is a coated precipitated magnesium hydroxide (Magnefin® H5HV) with a particle size of 1.6-2.0 $\mu$m as determined by laser diffraction and BET surface area of 5 $m^2/g$ commercially available from Huber.

MDH-2 is a stearic acid coated grinded magnesium hydroxide, Brucite®, (Ecopiren® 3,5C) with a particle size ($D_{50}$) of 3.5 $\mu$m determined by laser diffraction and a BET surface area of 7-10 $m^2/g$ commercially available from Europiren B.V. (Netherlands).

$CaCO_3$ is a stearic acid coated calcium carbonate (EXh1SP) with a particle size of 1.4 $\mu$m determined by laser diffraction commercially available from Omya AG, Switzerland.

POLYGLUE® GE300C is a linear low-density polyethylene grafted with maleic acid anhydride (maleic acid anhydride content = 0.5 to 1.0 wt.-%, $MFR_2$ = 2.0 g/10 min, density = 930 $kg/m^3$), commercially available from HDC Hyundai EP Co., Ltd. under the tradename Polyglue® GE300C.

QUEO 8201 is a very low-density copolymer of polyethylene having a density of 883 $kg/m^3$ and a $MFR_2$ of 1.1 g/10 min, commercially available as Queo 8201 from Borealis AG (Austria).

**Table 2**

| Component | Unit | CE1 | CE2 | IE-1 | IE2 | IE3 | IE4 |
|---|---|---|---|---|---|---|---|
| Polymer A | wt.-% | 99.45 | | | | | |
| Polymer B | wt.-% | | - | 98.1 | - | | |
| CE1 | wt.-% | | 74.35 | | | | |
| IE1 | | | | | 75 | 75 | 42 |
| Irganox 1010 | wt.-% | 0.15 | | 0.15 | | | |
| Irgafos 168 | wt.-% | 0.05 | 0.1 | 0.15 | | | |
| Calcium stearate | wt.-% | 0.05 | 0.05 | 0.4 | | | |
| Chimassorb 944 | wt.-% | 0.3 | 0.1 | 0.2 | | | |
| Chimassorb 2020 | | | | 0.2 | | | |
| Tinuvin 783 | wt.-% | | | 0.8 | | | 0.8 |
| Carbon Black | | | 0.4 | | | | |
| MDH-1 | wt.-% | | 25.0 | | | | 43 |
| MDH-2 | wt.-% | | | | 25 | | |
| $CaCO_3$ | wt.-% | | | | | 25 | |

(continued)

| Component | Unit | CE1 | CE2 | IE-1 | IE2 | IE3 | IE4 |
|---|---|---|---|---|---|---|---|
| Queo 8201 | | | | | | | 11 |
| Polyglue GE300C | | | | | | | 3.2 |
| Properties | | | | | | | |
| Tracking (1h 5.75 kV + 1h 6kV) | pass-% | 0 | 0 | 40 | 100 | 100 | 100 |
| Tracking (1h 4.5 + 1 h 4.75 kV) | | | 0 | 100 | 100 | 100 | 100 | 100 |
| Tensile Strength | MPa | >25 | 20 | >24.5 | 23.1 | 23.2 | 19.4 |
| Elongation at break | % | >600 | >300 | >500 | 320 | 615 | 627 |

**Table 3**

| Component | Unit | IE5 | IE6 |
|---|---|---|---|
| IE1 | | 55.2 | 51.2 |
| Tinuvin 783 | wt.-% | 0.8 | 0.8 |
| MDH-1 | wt.-% | 40.0 | 40.0 |
| Queo 8201 | wt.-% | 4 | |
| EMA | wt.-% | | 8 |
| Properties | | | |
| Tracking (1h 5.75 kV + 1h 6kV) | pass-% | 100 | 100 |
| Tracking (1h 4.5 + 1 h 4.75 kV) | | 100 | 100 |
| Tensile Strength | MPa | 20.6 | 20.7 |
| Elongation at break | % | 492 | 551 |

The comparative examples CE1 and CE2 in Table 2 above show that the addition of magnesium hydroxide as a filler significantly improves the tracking resistance. Nevertheless, also the polymer composition comprising 25 wt.% magnesium hydroxide according to CE2 does not pass the tracking test at a 6 kV level but is limited 4,75 kV. Surprisingly, the polymer composition according to the present invention (IE1) passes the track test at 4.75 kV, has a pass percent of 40% at 6 kV without addition of magnesium hydroxide and additionally shows good mechanical properties.

A mix of $CaCO_3$ and $Mg(OH)_2$ can also give good tracking and fire-retardant properties. Even a higher filler content as used in IE4 to IE6 leads not only to excellent tracking performance, but also the mechanical properties are satisfactory.

By incorporation of a filler into the inventive polymer formulation, IE1, as done in IE2, IE3, IE4, IE5 and IE6, a 100% pass percent at the highest track level (6 kV) can be reached. This level is also reached by the use of calcium carbonate. In addition, the fillers used in IE2 and IE3 have significant cost advantages over the filler used for CE2. It can further be seen that the composition of IE3 comprising calcium carbonate as a filler gives less reduction of the mechanical and electrical performance, compared to compositions comprising magnesium hydroxide as a filler (CE2). In highly filled materials, the optional use of a polymer with filler acceptance may improve mechanical properties.

For IE4 also flame retardant testing has been performed. A covered conductor comprising the composition of IE4 was tested in accordance with the vertical flame test in accordance with EN60332-1 and the single wire flame test in accordance with UL 1581. The cable fulfilled the requirements according to both standards. The material compositions with filler in IE4 can achieve needed fire performance for cables and covered conductors and can suppress or reduce fire spreading.

The polymer composition according to IE1 further gives acceptable performance in the Sepap UV ageing test reaching an absolute elongation of 50% after 1000 hours ageing. This indicates that the material shows sufficient long term stability without brittleness, even without addition of carbon black. The result further indicates that the composition of IE1 can advantageously be used in overhead power cables with sufficient thermal resistance against sunlight and improved UV resistance, in spite of not containing carbon black. Accordingly, the power losses can be reduced compared to a black cable. In addition, the visibility of the cable is reduced, especially if it is coloured in grey.

Accordingly, the multimodal, hexene based polymer composition of the present invention shows a surprisingly improved tracking resistance, even in the absence of a filler in the polymeric material, making it highly suitable in high end wire and cable applications, particularly in optical cables or overhead power cables. The filled polymer compositions of the present invention are further improved in heat resistance and UV resistance, show good mechanical properties, in addition to the increased tracking resistance. Furthermore, the compositions of the invention comprising fillers, especially metal hydroxides or metal carbonates, show also flame retardant performance, reducing the risk for spreading bush fires.

**Claims**

1. A crosslinkable polymer composition comprising a copolymer of ethylene and hexene, which is a multimodal polyethylene having at least two polymer fractions present in the polymer, each having different weight average molecular weights,
the copolymer having a crystallinity, determined by DSC as described herein, of at least 40%,
the polymer composition further comprising a carbon black content of not more than 4 wt.%, based on the total weight of the polymer composition,
wherein the polymer composition does not contain a silane-modified polymeric component, and
the polymer composition passes the tracking resistance test, determined according to IEC60587 (2007), method 2A, at least at 4.5 kV for 1h followed at 4.75 kV for 1 h on compression molded plaques prepared according to ISO 11357 and as described herein.

2. The crosslinkable polymer composition according to claim 1, wherein the polymer composition passes the tracking resistance test determined according to IEC60587 (2007), method 2A, at least at 5.75 kV for 1h followed at 6kV for 1h, on compression molded plaques prepared according to ISO 11357 and as described herein

3. The crosslinkable polymer composition according to claim 1 or 2, wherein the copolymer of ethylene and hexene has a density of from 920 to 970 kg/m$^3$ and a melt flow rate MFR$_2$, determined according to ISO 1133 at a load of 2.16 kg at 190 °C, of less than 0.4 g/10 min.

4. The crosslinkable polymer composition according to any one of claims 1 to 3, further comprising a filler selected from the group consisting of aluminum trioxide, metal carbonate, calcium oxide, and/or a metal hydroxide, and/or further comprising a UV stabiliser and/or an antioxidant and/or a pigment, and/or
further comprising an ethylene polymer or copolymer grafted or copolymerized with an unsaturated carboxylic acid or a derivative thereof, and/or an elastomeric ethylene copolymer.

5. The crosslinkable polymer composition according to claim 4, wherein the filler is contained in an amount of at least 25 wt.%, based on the total weight of the polymer composition.

6. The crosslinkable polymer composition according to claim 4 or 5, wherein the UV stabilizer is a hindered amine light-stabilizer (HALS).

7. The crosslinkable polymer composition according to any one of the preceding claims, having a tensile strength, determined according to ISO 527-2, of at least 12.5 MPa, and/or
the polymer composition having an elongation at break, determined according to ISO 527-2, of at least 300%, and/or
the polymer composition having a UV resistance in terms of an elongation of at least 50% after 1000 h ageing, determined according to the Sepap UV ageing test , measured in accordance with NFC62-062-2 on 1 mm plaques.

8. The crosslinkable polymer composition according to any one of the preceding claims, which has been crosslinked in the presence of a crosslinking agent or in the presence of moisture and a condensation catalyst.

9. A track resistant cable comprising at least one layer of the polymer composition according to any one of claims 1 to 8.

10. The cable according to claim 9, which is a power cable or an optical cable.

11. The cable according to claim 9 or 10, wherein the at least one layer is an insulation layer, or a jacket layer or a sheath layer.

**12.** Use of a polymer composition according to any one of claims 1 to 9 in a wire or cable for increasing track resistance, and/or
for increasing fire retardancy along the length of the wire or cable.

**13.** Method for manufacturing a polymer composition according to any one of claims 1 to 9, comprising polymerization of at least two polymer components in separate reaction stages of a multistage polymerization process in the presence of a polymerisation catalyst, wherein the polymer component formed in a preceding polymerisation stage is present in a subsequent polymerisation stage.

**14.** The method of claim 13, wherein polymerization is conducted in the presence of a Ziegler-Natta catalyst.

Europäisches
Patentamt

European
Patent Office

Office européen
des brevets

# EUROPEAN SEARCH REPORT

Application Number

EP 20 21 7597

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 1 267 189 A1 (BOREALIS TECH OY [FI]) 18 December 2002 (2002-12-18) * the whole document * | 1-14 | INV. C08L23/08 H01B3/44 C08K3/22 |
| A | EP 2 182 524 A1 (BOREALIS AG [AT]) 5 May 2010 (2010-05-05) * example 1 * | 1-14 | C08K3/26 C08F210/16 C08F2/00 |
| X | US 8 796 373 B1 (SK INNOVATION CO LTD [KR]; SK GLOBAL CHEMICAL CO LTD [KR]) 5 August 2014 (2014-08-05) * the whole document * | 1-14 | |
| X | WO 2010/110559 A2 (SK ENERGY CO LTD [KR]; CHO KYUCHEOL [KR] ET AL.) 30 September 2010 (2010-09-30) * the whole document * | 1-14 | |

|  |
|---|
| **TECHNICAL FIELDS SEARCHED (IPC)** |
| C08F C08L H01B C08K |

The present search report has been drawn up for all claims

| Place of search | Date of completion of the search | Examiner |
|---|---|---|
| Munich | 7 July 2021 | Balmer, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 21 7597

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2021

| Patent document cited in search report | | | Publication date | Patent family member(s) | | | Publication date |
|---|---|---|---|---|---|---|---|
| EP | 1267189 | A1 | 18-12-2002 | AT | 449359 | T | 15-12-2009 |
| | | | | CN | 1509420 | A | 30-06-2004 |
| | | | | EP | 1267189 | A1 | 18-12-2002 |
| | | | | US | 2004213527 | A1 | 28-10-2004 |
| | | | | WO | 02101440 | A1 | 19-12-2002 |
| EP | 2182524 | A1 | 05-05-2010 | CA | 2741603 | A1 | 06-05-2010 |
| | | | | CN | 102257576 | A | 23-11-2011 |
| | | | | EP | 2182524 | A1 | 05-05-2010 |
| | | | | EP | 2353169 | A1 | 10-08-2011 |
| | | | | KR | 20110081892 | A | 14-07-2011 |
| | | | | US | 2011290529 | A1 | 01-12-2011 |
| | | | | WO | 2010049259 | A1 | 06-05-2010 |
| US | 8796373 | B1 | 05-08-2014 | CN | 104995252 | A | 21-10-2015 |
| | | | | EP | 2954005 | A1 | 16-12-2015 |
| | | | | JP | 6309030 | B2 | 11-04-2018 |
| | | | | JP | 2016513339 | A | 12-05-2016 |
| | | | | KR | 20140101453 | A | 20-08-2014 |
| | | | | US | 8796373 | B1 | 05-08-2014 |
| | | | | WO | 2014123327 | A1 | 14-08-2014 |
| WO | 2010110559 | A2 | 30-09-2010 | CN | 102361926 | A | 22-02-2012 |
| | | | | EP | 2417194 | A2 | 15-02-2012 |
| | | | | JP | 5690807 | B2 | 25-03-2015 |
| | | | | JP | 2012521632 | A | 13-09-2012 |
| | | | | KR | 20100106871 | A | 04-10-2010 |
| | | | | US | 2012012363 | A1 | 19-01-2012 |
| | | | | WO | 2010110559 | A2 | 30-09-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 2193583 A2
- EP 1267189 A1
- WO 9305424 A1
- JP 2004010864 A
- WO 9212182 A
- EP 040992 A
- EP 041796 A
- EP 022376 A
- EP 0887379 A
- EP 3622541 A1
- EP 19191837 A
- EP 1655333 A1
- US 4582816 A
- US 3405109 A
- US 3324093 A
- EP 479186 A
- US 5391654 A
- EP 1378528 A1
- WO 9815591 A
- US 4117195 A
- US 3646155 A
- EP 0193317 A1
- EP 1327664 B1

### Non-patent literature cited in the description

- *CHEMICAL ABSTRACTS,* 128-37-0
- *CHEMICAL ABSTRACTS,* 2082-79-3
- *CHEMICAL ABSTRACTS,* 41484-359
- *CHEMICAL ABSTRACTS,* 693-36-7
- *CHEMICAL ABSTRACTS,* 2500-88-1
- *CHEMICAL ABSTRACTS,* 31570-04-4
- *CHEMICAL ABSTRACTS,* 38613-77-3
- *CHEMICAL ABSTRACTS,* 10081-67-1
- *CHEMICAL ABSTRACTS,* 26780-96-1
- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **CASTIGNOLLES, P. ; GRAF, R. ; PARKINSON, M. ; WILHELM, M. ; GABORIEAU, M.** *Polymer,* 2009, vol. 50, 2373
- **POLLARD, M. ; KLIMKE, K. ; GRAF, R. ; SPIESS, H.W ; WILHELM, M ; SPERBER, O ; PIEL, C. ; KAMINSKY, W.** *Macromolecules,* 2004, vol. 37, 813
- **FILIP, X ; TRIPON, C ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, S1, , S198
- **J. RANDALL.** *Macromol. Sci., Rev. Macromol. Chem. Phys.,* 1989, vol. C29, 201
- **KLIMKE, K. ; PARKINSON, M ; PIEL, C. ; KAMINSKY, W. ; SPIESS, H.W ; WILHELM, M.** *Macromol. Chem. Phys.,* 2006, vol. 207, 382
- **PARKINSON, M. ; KLIMKE, K. ; SPIESS, H.W ; WILHELM, M.** *Macromol. Chem. Phys.,* 2007, vol. 208, 2128
- **CASTIGNOLLES, P. ; GRAF, R ; PARKINSON, M. ; WILHELM, M. ; GABORIEAU, M.** *Polymer,* 2009, vol. 50, 2373
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **KLIMKE, K. ; PARKINSON, M. ; PIEL, C ; KAMINSKY, W. ; SPIESS, H.W. ; WILHELM, M.** *Macromol. Chem. Phys.,* 2006, vol. 207, 382
- **FILIP, X ; TRIPON, C. ; FILIP, C.** *J. Mag. Resn.,* 2005, vol. 176, 239
- **GRIFFIN, J.M. ; TRIPON, C ; SAMOSON, A. ; FILIP, C. ; BROWN, S.P.** *Mag. Res. in Chem.,* 2007, vol. 45, S1, , S198